# FASCICULE DE BREVET EUROPEEN

(11) **EP 2 298 589 B1**
(45) Date de publication et mention de la délivrance du brevet: **05.06.2013**
(21) Numéro de dépôt: 10175042.0
(22) Date de dépôt: 02.09.2010
(51) Int. Cl.: B60N 2/015

(54) **Mécanisme d'ancrage pour siège de véhicule automobile**
Verankerungseinrichtung für Autositz
Anchoring mechanism for vehicle seat

(30) Priorité: 21.09.2009 FR 0956465
(43) Date de publication de la demande: 23.03.2011
(73) Titulaire: GRUPO ANTOLIN-INGENIERIA, S.A., 09080 Burgos (ES)
(72) Inventeur: Boyer, Nathanael, 43370, CUSSAC SUR LOIRE (FR); Decombe, François, 42290, SORBIERS (FR)
(74) Mandataire: Delorme, Nicolas

(56) Documents cités:
- DE-A1-102007 054 765
- DE-U- 20 304 508
- US-A- 5 671 965
- US-A- 6 036 252
- US-A- 6 161 890
- US-A1- 2005 173 939
- US-A1- 2008 054 151
- US-B1- 6 179 363

## Description

La présente invention concerne un mécanisme d'ancrage pour siège de véhicule automobile.

De nombreux véhicules automobiles sont équipés de sièges amovibles. Un siège amovible peut présenter généralement une, deux, trois ou quatre places. Dans le cas d'un siège à deux, trois ou quatre places, on utilise généralement le terme de banquette.

Pour assurer leur amovibilité, les sièges sont dotés de mécanismes d'ancrage assurant le verrouillage du siège sur le plancher et qui permettent de déverrouiller le siège pour l'extraire du véhicule.

L'ancrage peut se faire sur un fil métallique convenablement dimensionné qui est fixé sur le plancher du véhicule. Un verrou vient s'engager sur le fil pour réaliser le verrouillage sur la structure du véhicule.

Les documents DE-A-10 2007 054765 et US 2008/0054151 montrent un ancrage de ce type.

L'ancrage correct d'un siège amovible est un point tout à fait critique dans la sécurité.

En effet, en cas d'ancrage défectueux, le siège peut se détacher du plancher lors de l'accélération ou de décélération du véhicule avec des conséquences potentiellement dramatiques pour les passagers qui sont assis sur le siège en question, mais également pour les autres passagers du véhicule.

Pour cela, lors de l'accostage du siège pour son verrouillage, le mécanisme d'ancrage qui possède un verrou mobile doit être dans un état « déverrouillé » c'est-à-dire un état dans lequel le verrou est rétracté. Une fois le siège en position le mécanisme d'ancrage peut passer dans un état « verrouillé » c'est-à-dire un état dans lequel le verrou vient s'engager sur le fil pour réaliser la liaison du siège sur le véhicule.

Il est tout à fait critique que le passage de l'état déverrouillé à l'état verrouillé ne se fasse que lorsque le verrou est à proximité du fil et vient s'engager sur le fil.

Lors du retrait d'un siège, le mécanisme d'ancrage doit être placé dans un état déverrouillé stable dans lequel le verrou n'est plus en prise avec le fil, ce qui permet à un utilisateur de retirer le siège.

En plus de répondre aux fonctions de verrouillage et de déverrouillage, il importe que le mécanisme d'ancrage présente une structure fiable, qui génère peu de bruits parasites et qui soit d'une utilisation intuitive.

Dans ce contexte technique, un but de l'invention est de proposer un mécanisme d'ancrage d'un siège sur un plancher de véhicule automobile permettant un ancrage qui garantisse un verrouillage effectif sans intervention d'un utilisateur.

L'invention concerne un mécanisme d'ancrage d'un siège, conforme à la revendication 1.

Ainsi l'invention propose un mécanisme d'ancrage qui permet un verrouillage mais également un état déverrouillé stable ; ce dernier état est rendu possible par la présence d'une concavité dans le verrou sur laquelle le mécanisme et le siège peuvent reposer pour permettre le retrait du siège.

Selon plusieurs caractéristiques indépendantes ou combinées :
- le mécanisme d'ancrage comprend deux flasques entre lesquels le verrou est interposé,
- le mécanisme d'ancrage comprend un ressort qui exerce une traction sur le verrou et une butée de fin de rotation du verrou qui est positionnée de telle sorte que le crochet se trouve en regard de l'échancrure de l'échancrure de chaque flasque,
- le mécanisme d'ancrage comprend une manette reliée au verrou dont le déplacement entraîne une rotation du verrou contre l'effet du ressort en vue de faire passer le crochet de sa position dans laquelle le crochet est en regard de chaque échancrure à une position dans laquelle la concavité se trouve en regard de chaque échancrure,
- le verrou présente une rampe d'avalement adjacente au crochet qui se place en face de chaque échancrure,
- une bielle relie le verrou et la manette,
- la bielle présente une forme de chape qui enserre le verrou,
- la manette présente une partie postérieure munie d'un pion qui vient s'appuyer sur la bielle lorsque la manette est mise en rotation,
- le verrou est muni d'un pion contre lequel s'appuie la bielle lorsqu'elle est entrainée par la manette mettant en rotation le verrou.

L'invention concerne également un siège de véhicule automobile présentant au moins un pied avant et au moins un pied arrière **caractérisé en ce qu**'au moins un des pieds avant et arrière embarque un mécanisme d'ancrage tel que précédemment décrit.

De préférence, le mécanisme d'ancrage est embarqué sur au moins un des pieds arrière.

Pour sa bonne compréhension, l'invention est décrite en référence au dessin ci annexé représentant, à titre d'exemple non limitatif, une forme de réalisation d'un mécanisme d'ancrage selon celle-ci.
Figure 1 est une vue en perspective d'un mécanisme d'ancrage selon l'invention,

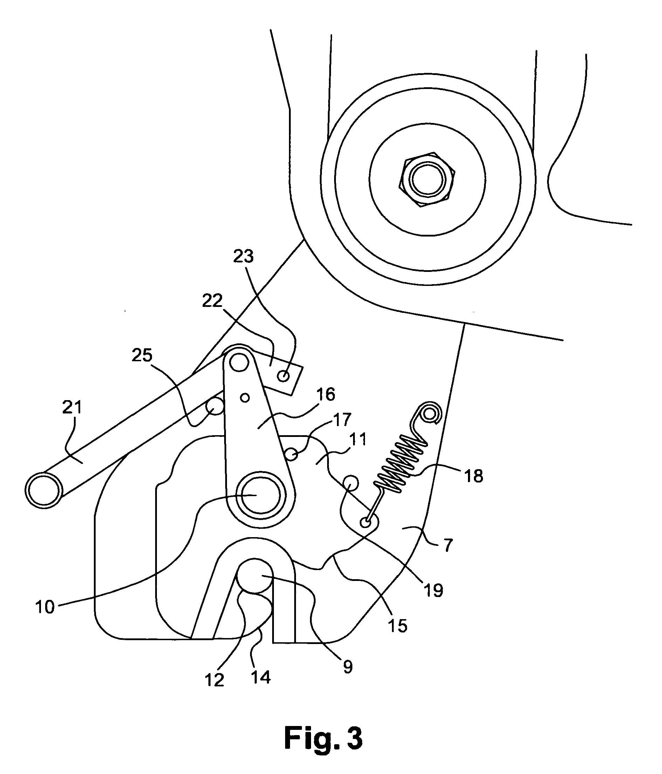

Figures 2 et 3 représentent le mécanisme d'ancrage sans l'un de ses flasques latéraux, en perspective et en vue de côté,
Figures 4 et 5 montrent le mécanisme d'ancrage en phase de déverrouillage,

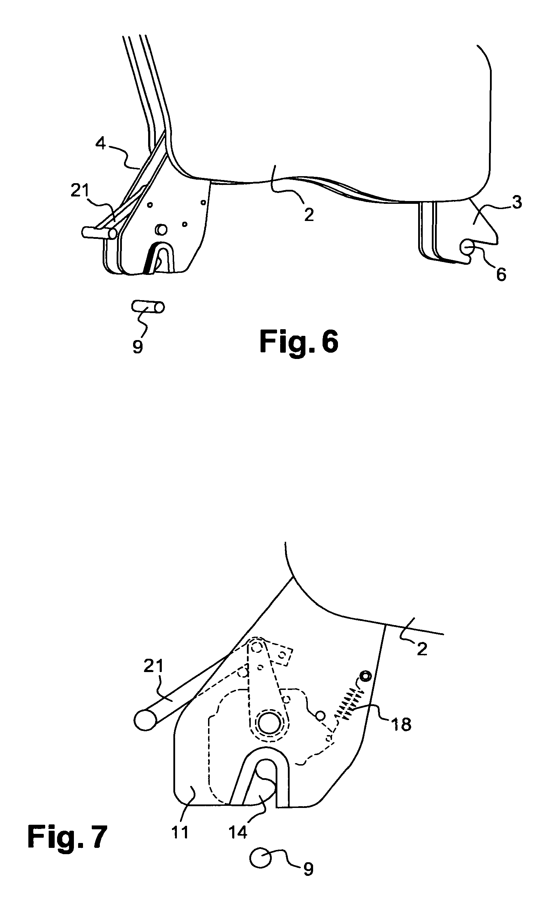

Figures 6 et 7 montrent le mécanisme d'ancrage en phase de verrouillage.

Dans le présent document, on entend par siège un équipement d'un véhicule ayant une assise et un dossier pouvant accueillir un ou plusieurs passagers.

On précise également que la description est réalisée par rapport à un référentiel cartésien lié à un véhicule automobile ; l'axe X étant orienté dans la direction longitudinale du véhicule, l'axe Y étant orienté dans la direction transversale du véhicule et l'axe Z étant orienté dans la direction verticale du véhicule. Les directions notamment longitudinale, transversale, avant, arrière, antérieur, postérieur et verticale sont ainsi définies par rapport à ce référentiel.

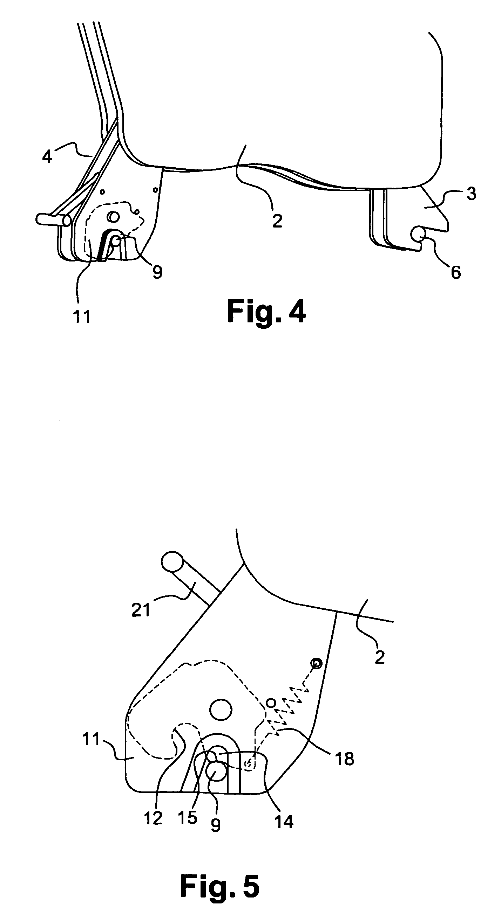

On peut commencer la description des figures en se reportant tout d'abord à la figure 4 qui montre, partiellement, un siège de véhicule équipé d'un mécanisme d'ancrage selon l'invention.

La figure 4 représente un brancard 2 d'un siège, c'est-à-dire un élément longitudinal structurel du siège qui est équipé, à son extrémité avant, d'un pied avant 3 et à son extrémité arrière, d'un pied arrière 4. En pratique, le siège possède au moins deux brancards 2 mais dans le cas d'une banquette, il est possible de prévoir trois ou quatre brancards 2. Ce brancard 2 longitudinal assure la liaison entre le pied avant 3 et le pied arrière 4, d'une part, et avec l'ensemble assise/dossier, d'autre part, qui n'apparaissent pas sur les dessins.

Un siège ou une banquette peut présenter quatre, six ou huit liaisons au plancher selon qu'il possède deux, trois ou quatre brancards.

Le pied avant 3 possède une structure sans pièce mobile. Le pied avant comprend un crochet en forme générale de C qui est dimensionné de manière à venir se fixer sur un fil 6 d'ancrage qui est lui-même assujetti au plancher.

Le mécanisme d'ancrage 1 selon l'invention se trouve embarqué dans l'exemple représenté dans le pied arrière 4 du véhicule.

Dans l'exemple illustré, le mécanisme d'ancrage est constitué de deux flasques 7 parallèles maintenus à distance l'un de l'autre.

Chacun des flasques 7 présente, sur sa partie inférieure, une échancrure 8 arrondie dont le rayon correspond sensiblement à celui d'un fil d'ancrage arrière 9.

Le mécanisme d'ancrage 1 comprend un verrou 11 mobile en rotation. La liaison du verrou 11 est réalisée par un axe 10 qui est tenu entre les deux flasques 7.

Le verrou 11 possède plusieurs zones fonctionnelles.

Il possède ainsi un crochet 12 qui permet un engagement sur le fil lié au plancher. Adjacent à sa partie en crochet 12, le verrou 11 est conformé pour présenter une rampe 14 d'avalement dont la fonction apparaîtra plus loin. Par rampe 14, il faut entendre une surface orientée de manière oblique qui est adjacente au crochet 12.

Le verrou 11 présente également une concavité 15 sensiblement en arc de cercle dont le rayon est proche de celui du fil. Cette concavité 15 est adjacente au crochet 12.

Pour déclencher la rotation du verrou 11 il est prévu une bielle 16, en forme de chape, qui est fixée sur l'axe de montage du verrou 11. La mise en prise de la bielle 16 et du verrou 11 est réalisée par un pion 17 qui est placé sur le verrou 11. Lors de la rotation de la bielle 16, celle-ci vient en appui contre le pion, ce qui entraîne le verrou 11.

On note qu'un ressort 18 exerce une traction sur le verrou 11, cette traction étant limitée par une butée de fin de rotation.

Compte tenu de la position de la butée 19 de fin de rotation et de l'action du ressort 18, l'état stable du mécanisme d'ancrage est un état dans lequel le verrou 11 se trouve dans une position dans laquelle le crochet 12 se trouve à l'aplomb des deux échancrures 8. En termes pratiques, la butée 19 de fin de rotation est constituée par une entretoise qui maintient à distance les flasques 7.

La bielle 16 est connectée à une manette 21 en T. La liaison entre la manette 21 en T et la bielle 16 est une liaison pivot constituée par un axe. Dans l'exemple représenté sur les figures, la manette 21 est montée libre en rotation sur cet axe. Une liaison par clavette ou cannelure peut être envisagée.

La manette 21 possède une partie postérieure 22 qui est dotée de deux pions 23 qui viennent s'appuyer sur la bielle 16, lorsque la bielle 16 est mise en rotation.

Le mécanisme comprend une butée 25 contre laquelle la bielle 16 repose et contre laquelle la manette 21 en T repose également, de sorte que l'extrémité de la manette 21 en T dépasse des deux flasques 7. La manette 21 est ainsi soutenue et ne tombe pas.

On peut préciser que la manette 21 en T peut présenter une couleur vive de façon à être clairement visible pour un utilisateur.

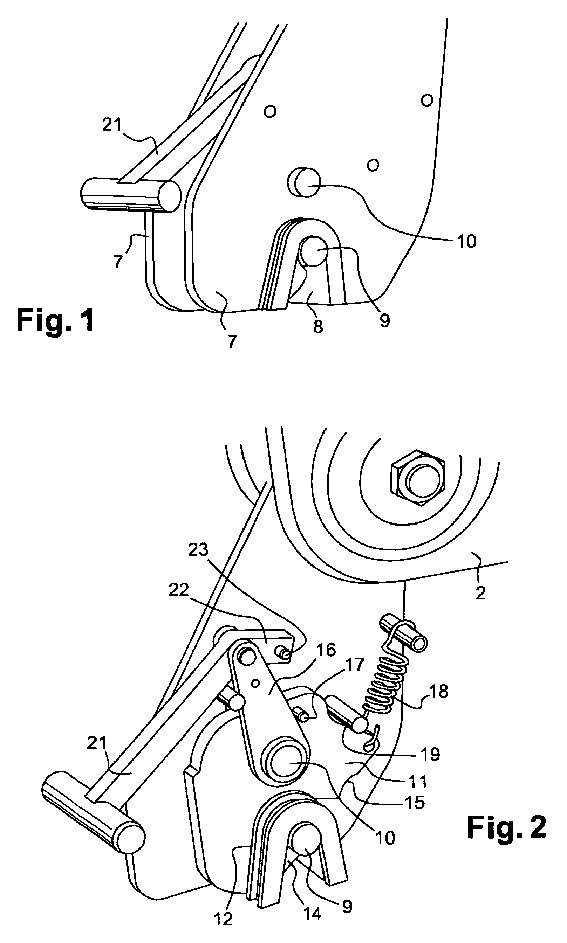

On va à présent décrire le fonctionnement du dispositif d'ancrage selon l'invention à partir de sa position verrouillée telle qu'elle apparaît, par exemple, à la figure 2.

Le mécanisme d'ancrage 1, lorsqu'il est dans son état de verrouillage, est placé par rapport au fil dans une position telle que le verrou 11 est engagé sur le fil.

Plus particulièrement, le crochet 12 du verrou 11 enserre le fil. Le verrou 11 est maintenu dans cette position par le ressort 18 qui exerce une force de rappel et qui empêche le verrou 11 d'échapper du fil 9, l'action de rappel du ressort 18 étant limitée par la butée 19 de fin de rotation.

Dans cette position, le mécanisme d'ancrage assure donc un verrouillage sur le fil 9.

Pour effectuer le déverrouillage du siège, un utilisateur exerce une action sur la manette 21 en T en vue de l'amener vers le haut du siège.

Au cours de cette action, la partie postérieure 22 de la manette 21 vient prendre appui sur la bielle 16 entraînant la bielle 16 en rotation.

Le mouvement de rotation de la bielle 16 est transmis au verrou 11 par le pion 17 qui équipe le verrou. La rotation du verrou 11 le dégage du fil 9 contre l'action du ressort 18 qui se trouve alors dans un état d'extension.

En poursuivant son action sur la manette 21, l'utilisateur exerce une action de soulèvement sur le mécanisme qui le fait arriver dans une position dans laquelle la concavité 15, qui est adjacente au crochet 12, vient se placer sur le fil 9 comme cela est illustré clairement sur la figure 5. Le mécanisme d'ancrage a ainsi atteint une position stable déverrouillée.

En effet, dans cette position, le verrou 11 n'exerce aucune retenue sur le fil 9 et le siège peut être extrait du véhicule.

Dès que le contact entre la concavité 15 et le fil 9 a cessé, le ressort 18 par son action de traction ramène le verrou 11 dans un état de verrouillage, c'est-à-dire un état dans lequel la partie formant crochet 12 du verrou 11 se trouve en regard des échancrures 8 de chacun des flasques 7.

Le verrouillage se fait de la manière suivante.

Le siège est engagé premièrement par son pied avant dans le fil 9 avant. Cet engagement se fait de manière simple en positionnant le pied en forme de C contre le fil 9.

Le pied arrière est ensuite posé sur le fil 9 arrière, la rampe 14 d'avalement vient se placer contre le fil 9 arrière. Par le poids du siège lui-même, éventuellement aidé par une pression de l'utilisateur, le verrou 11 s'écarte de sa position de verrouillage et, après avoir avalé le fil 9, reprend sa position de verrouillage puisque le ressort 18 tracte le verrou 11 vers celle-ci.

On voit donc que le mécanisme d'ancrage selon l'invention possède un petit nombre de pièces en mouvement, ce qui est un gage de fiabilité ainsi que de fonctionnement sans bruit parasite.

Son utilisation est extrêmement intuitive puisque l'utilisateur n'a qu'une interface d'utilisation, en l'occurrence une manette 21.

## Revendications

1. Mécanisme d'ancrage (1) d'un siège notamment d'un siège de véhicule automobile sur un fil (9) d'ancrage arrière (4) disposé dans un plancher du véhicule,
le mécanisme d'ancrage comprenant au moins un flasque (7) dans lequel est ménagée une échancrure (8) et un verrou (11) pivotant présentant un crochet (12) **caractérisé en ce que** le verrou comprend en outre une concavité (15) adjacente au crochet, le verrou (11) étant susceptible de pivoter entre une position de verrouillage dans laquelle le crochet (12) est placé en regard de l'échancrure (8) et enserre le fil (9) et une position déverrouillée dans laquelle la concavité (15) est en regard de l'échancrure (8) et repose sur le fil (9), le mécanisme d'ancrage étant ainsi en position stable déverrouillée.

2. Mécanisme d'ancrage selon la revendication 1, **caractérisé en ce que** le mécanisme d'ancrage comprend deux flasques (7) entre lesquels le verrou (11) est interposé.

3. Mécanisme d'ancrage selon la revendication 2, **caractérisé en ce qu'**il comprend un ressort (18) qui exerce une traction sur le verrou (11) et une butée (19) de fin de rotation du verrou (11) qui est positionnée de telle sorte que le crochet (12) se trouve en regard de l'échancrure (8) de chaque flasque (7).

4. Mécanisme d'ancrage selon l'une des revendications 1 à 3, **caractérisé en ce qu'**il comprend une manette (21) reliée au verrou (11) dont le déplacement entraîne une rotation du verrou (11) contre l'effet du ressort (18) en vue de faire passer le crochet (12) de sa position dans laquelle le crochet (12) est en regard de chaque échancrure (8) à une position dans laquelle la concavité se trouve en regard de chaque échancrure (8).

5. Mécanisme d'ancrage selon l'une des revendications 1 à 4, caractérisé en que le verrou (11) présente une rampe (14) d'avalement adjacente au crochet (12) qui se place en face de chaque échancrure (8).

6. Mécanisme d'ancrage selon l'une des revendications 4 à 5, **caractérisé en ce qu'**une bielle (16) relie le verrou (11) et la manette (21).

7. Mécanisme d'ancrage selon la revendication 6, **caractérisé en ce que** la bielle (16) présente une forme de chape qui enserre le verrou (11).

8. Mécanisme d'ancrage selon la revendication 6, **caractérisé en ce que** la manette (21) présente une partie postérieure (22) munie d'un pion qui vient s'appuyer sur la bielle (16) lorsque la manette (21) est mise en rotation.

9. Mécanisme d'ancrage selon l'une des revendications 6 à 8, **caractérisé en ce que** le verrou (11) est muni d'un pion (17) contre lequel s'appuie la bielle (16) lorsqu'elle est entrainée par la manette (21) mettant en rotation le verrou (11).

10. Siège de véhicule automobile présentant au moins un pied avant et au moins un pied arrière **caractérisé en ce qu'**au moins un des pieds avant et arrière embarque un mécanisme d'ancrage selon l'une des revendications 1 à 9.

11. Siège de véhicule automobile selon la revendication 10, **caractérisé en ce que** le mécanisme d'ancrage est embarqué sur au moins un des pieds arrière.

## Patentansprüche

1. Verankerungsmechanismus (1) eines Sitzes, insbesondere eines Kraftfahrzeug-Sitzes, auf einem hinteren (4) Verankerungsdraht (9), der in einem Boden des Fahrzeugs angeordnet ist,
wobei der Verankerungsmechanismus mindestens ein Seitenblech (7) umfasst, in das eine Aussparung (8) eingearbeitet ist, und einen drehbaren Riegel (11), der einen Haken (12) aufweist, **dadurch gekennzeichnet, dass** der Riegel ferner neben dem Haken eine Konkavität (15) umfasst, wobei der Riegel (11) zwischen einer Verriegelungsstellung, in der der Haken (12) gegenüber der Aussparung (8) platziert ist und den Draht (9) umschließt, und einer Entriegelungsstellung, in der sich die Konkavität (15) gegenüber der Aussparung (8) befindet und sich auf dem Draht (9) abstützt, drehbar ist, wobei der Verankerungsmechanismus damit in stabiler entriegelter Stellung ist.

2. Verankerungsmechanismus nach Anspruch 1, **dadurch gekennzeichnet, dass** der Verankerungsmechanismus zwei Seitenbleche (7) umfasst, zwischen denen der Riegel (11) zwischengestellt ist.

3. Verankerungsmechanismus nach Anspruch 2, **dadurch gekennzeichnet, dass** er eine Feder (18) umfasst, die eine Zugkraft auf den Riegel (11) ausübt und einen Rotationsendanschlag (19) des Riegels (11), der derart positioniert ist, dass sich der Haken (12) gegenüber der Aussparung (8) jedes Seitenblechs (7) befindet.

4. Verankerungsmechanismus nach einem der Ansprüche 1 bis 3, **dadurch gekennzeichnet, dass** er einen Griff (21) umfasst, der mit dem Riegel (11) verbunden ist, dessen Verlagerung eine Rotation des Riegels (11) gegen die Federwirkung (18) bewirkt, um den Haken (12) aus seiner Stellung, in der der Haken (12) gegenüber jeder Aussparung (8) ist, in eine Stellung wechseln zu lassen, in der sich die Konkavität gegenüber jeder Aussparung (8) befindet.

5. Verankerungsmechanismus nach einem der Ansprüche 1 bis 4, **dadurch gekennzeichnet, dass** der Riegel (11) neben dem Haken (12) eine Einzugrampe (14) aufweist, die sich gegenüber jeder Aussparung (8) platziert.

6. Verankerungsmechanismus nach einem der Ansprüche 4 bis 5, **dadurch gekennzeichnet, dass** eine Pleuelstange (16) den Riegel (11) mit dem Griff (21) verbindet.

7. Verankerungsmechanismus nach Anspruch 6, **dadurch gekennzeichnet, dass** die Pleuelstange (16) eine Gabelkopfform hat, die den Riegel (11) umfasst.

8. Verankerungsmechanismus nach Anspruch 6, **dadurch gekennzeichnet, dass** der Griff (21) einen posterioren Abschnitt (22) aufweist, der mit einem Stift ausgestattet ist, der sich auf der Pleuelstange (16) abstützt, wenn der Griff (21) in Rotation versetzt wird.

9. Verankerungsmechanismus nach einem der Ansprüche 6 bis 8, **dadurch gekennzeichnet, dass** der Riegel (11) mit einem Stift (17) ausgestattet ist, auf dem sich die Pleuelstange (16) abstützt, wenn diese vom Griff (21) angetrieben wird, der den Riegel (11) in Rotation versetzt.

10. Kraftfahrzeugsitz, der mindestens einen vorderen Fuß und mindestens einen hinteren Fuß aufweist, **dadurch gekennzeichnet, dass** mindestens einer der vorderen und hinteren Füße einen Verankerungsmechanismus nach einem der Ansprüche 1 bis 9 umfasst.

11. Kraftfahrzeugsitz nach Anspruch 10, **dadurch gekennzeichnet, dass** der Verankerungsmechanismus auf mindestens einem der hinteren Füße angeordnet ist.

## Claims

1. An anchoring mechanism (1) for a seat, in particular a vehicle seat, on a rear anchoring (4) wire (9) positioned in a floor of the vehicle,
the anchoring mechanism comprising at least one flange (7) in which at least one notch (8) is formed and a pivoting lock (11) having a hook (12),
**characterized in that** the lock further comprises a concavity (15) adjacent to the hook, the lock (11) being able to pivot between a locked position, in which the hook (12) is placed across from the notch (8) and grips the wire (9), and an unlocked position, in which the concavity (15) is across from the notch (8) and rests on the wire (9), the anchoring mechanism thus being in a stable unlocked position.

2. The anchoring mechanism according to claim 1, **characterized in that** the anchoring mechanism comprises two flanges (7) between which the lock (11) is inserted.

3. The anchoring mechanism according to claim 2, **characterized in that** it comprises a spring (18) that exerts a pulling force on the lock (11) and an end-of-rotation abutment (19) for the lock (11) that is positioned such that the hook (12) is across from the notch (8) of each flange (7).

4. The anchoring mechanism according to one of claims 1 to 3, **characterized in that** it comprises a lever (21) connected to the lock (11) whereof the movement causes the lock (11) to rotate against the effect of the spring (18) to move the hook (12) from its position in which the hook (12) is across from each notch (8) to a position in which the concavity is across from each notch (8).

5. The anchoring mechanism according to one of claims 1 to 4, **characterized in that** the lock (11) has an extension ramp (14) adjacent to the hook (12) that is across from each notch (8).

6. The anchoring mechanism according to one of claims 4 to 5, **characterized in that** a connecting rod (16) connects the lock (11) and the lever (21).

7. The anchoring mechanism according to claim 6, **characterized in that** the connecting rod (16) is in the form of a yoke that surrounds the lock (11).

8. The anchoring mechanism according to claim 6, **characterized in that** the lever (21) has a rear portion (22) provided with a slug that bears on the connecting rod (16) when the lever (21) is rotated.

9. The anchoring mechanism according to one of claims 6 to 8, **characterized in that** the lock (11) is provided with a slug (17) against which the connecting rod (16) bears when it is driven by the lever (21) rotating the lock (11).

10. A vehicle seat having at least one front leg and at least one rear leg, **characterized in that** at least one of the front and rear legs includes an anchoring mechanism according to one of claims 1 to 9.

11. The vehicle seat according to claim 10, **characterized in that** the anchoring mechanism is integrated on at least one of the rear legs.
